# EUROPÄISCHE PATENTSCHRIFT

(11) **EP 3 157 848 B1**
(45) Veröffentlichungstag und Bekanntmachung des Hinweises auf die Patenterteilung: **15.09.2021**
(21) Anmeldenummer: 15722522.8
(22) Anmeldetag: 12.05.2015
(51) Int. Cl.: B65G 15/36, D07B 7/18

(54) **VERFAHREN ZUR BESCHICHTUNG EINES ZUGTRÄGERS INSBESONDERE FÜR FÖRDERGURTE**
METHOD FOR COATING A TENSION MEMBER ESPECIALLY FOR CONVEYOR BELTS
PROCÉDÉ DE REVÊTEMENT D'UNE CORDE EN PARTICULIER POUR LES BANDES DE CONVOYEUR

(30) Priorität: 23.06.2014 DE 102014211932
(43) Veröffentlichungstag der Anmeldung: 26.04.2017
(73) Patentinhaber: ContiTech Transportbandsysteme GmbH, 30165 Hannover (DE)
(72) Erfinder: LOTZ, Florian, 37647 Brevörde (DE); DREIER, Marius, 37191 Katlenburg (DE)
(74) Vertreter: Continental Corporation
(86) Internationale Anmeldenummer: PCT/EP2015/060399
(87) Internationale Veröffentlichungsnummer: WO 2015/197257

(56) Entgegenhaltungen:
- EP-A1- 0 602 733
- EP-A1- 1 172 476
- WO-A1-01/87577
- WO-A1-2007/020156
- JP-A- 2002 069 871
- US-A- 1 745 285
- US-A- 3 339 357
- ANONYMOUS: "Belt cord construction", RESEARCH DISCLOSURE, MASON PUBLICATIONS, HAMPSHIRE, GB, Bd. 297, Nr. 12, 1. Januar 1989 (1989-01-01), XP007113287, ISSN: 0374-4353
- None

## Beschreibung

Die Erfindung betrifft ein Verfahren zur Beschichtung eines Zugträgers insbesondere für Fördergurte, insbesondere eines Zugträgers welcher als Stahlseil ausgebildet ist.

Fördergurte besitzen eine tragseitige und eine laufseitige Deckplatte aus jeweils einem polymeren Werkstoff mit elastischen Eigenschaften sowie einen eingebetteten Zugträger in Form von in Fördergurtlängsrichtung parallel verlaufenden Seilen, welche im Wesentlichen aus Stahl aufgebaut sein können.

Die zugkraftübertragende Karkasse eines Fördergurtes besteht aus Textil- und / oder Einlagen aus Stahl oder anderen korrosiven Metallen, die in der Regel von wenigstens einer Haftgummimischung umgeben sind. Die Karkassen sind allseitig von verschleißfesten Gummideckplatten und einem Gummikantenschutz umgeben. Zusätzlich können bei Bedarf noch diverse Durchschlagsschutzeinrichtungen vorhanden sein. Fördergurte bei denen die Karkasse im Wesentlichen aus Stahlseilen besteht, werden als Stahlseilfördergurte bezeichnet. Stahlseilfördergurte ermöglichen hervorragende Transportleistungen auch bei harter Beanspruchung. Ihre robuste Konstruktion garantiert sowohl eine hohe Bruchkraft bei stärkster Förderleistung, als auch eine gute Beaufschlagungsfestigkeit. Sie sind in der Regel besonders abriebfest, verrottungs- und korrosionsbeständig, chemisch resistent und thermisch stabil, so dass eine lange Lebensdauer bei niedrigem Wartungsbedarf gewährleistet ist.

Im Stahlseilfördergurt sind die Stahlseile meist als Lage in einer Ebene zwischen den Deckplatten angeordnet. Die Stahlseile sind aus Gründen der Haftung und des Korrosionsschutzes häufig verzinkt, besitzen zumeist einen Durchmesser von 2,8 bis 16,0 mm und können aus ca. 40 bis zu 250 Einzeldrähten bestehen

Zur Verbesserung der Haftung werden häufig zusätzlich noch Haftmischungen, auch als Haftgummimischungen bezeichnet, verwendet, die neben der Optimierung der Haftung als solche auch während des Vulkanisationsprozesses in die Stahlseile hineinfließen sollen um eine bessere Abdichtung zu ermöglichen. Das vollständige Durchdringen des gesamten Seils, die auch als Durchgummierung bezeichnet wird, ist essentiell für die Lebensdauer des Stahlseils und somit auch für den gesamten Fördergurt. Findet keine vollständige Durchgummierung statt, so verbleiben Hohlräume in der Seilkonstruktion offen, wodurch bspw. Flüssigkeiten wie Wasser, Öle, etc. im Seil wandern können und es zu fortschreitenden Oxidationsprozessen, insbesondere zu Korrosion, unter zunehmender Alterung und einem Frühausfall des gesamten Fördergurtes kommen kann. Die vollständige Durchdringung der gesamten Seilkonstruktion ist umso schwerer, je größer der Seildurchmesser ist. Bei geschlossenen Seilkonstruktionen, welche auch als parallelschlag- oder gleichschlag-Konstruktion bezeichnet werden, ist sie auch bei geringeren Durchmessern kaum zu erreichen. Bei offenen Seilkonstruktionen, welche auch als Kreuzschlagseilkonstruktion bezeichnet wird, existieren bei der Anbringung der Haftgummierung oft dynamische Probleme.

Zur Beschichtung, insbesondere von Stahlseilen, sind verschiedene Lösungsansätze bekannt. Zum einen lässt sich bspw. ein Überzug auf die Seile aufbringen, siehe u.a. DE 44 38 420 A1, DE 690 29 389 T2 oder DE 79 36 995 Ul. Dies führt allerdings zu den bereits oben erwähnten Nachteilen. In DE 694 21 090 T2 wird beispielsweise die Herstellung einer offenen Stahlcordkonstruktion beschrieben, bei dem die Herstellung in einem aufwendigen Verfahren gezielt unter Bildung von zusätzlichen Mikrolücken erfolgt, in die bei einer späteren Gummierung die Gummierungsmasse eindringen kann. WO 2007/020156 A1 offenbart ein Verfahren zur Beschichtung eines Zugträgers aufweisend wenigstens folgende Verfahrensschritte:
- Einführen des Zugträgers, welcher in Form eines Seils ausgebildet ist, in ein Tauchbad, welches die Beschichtungsmasse enthält und
- Kurzzeitiges mechanisches Öffnen der Seilkonstruktion während des Beschichtungsvorgangs,
- Eindringen der Beschichtungsmasse in die geöffnete Seilkonstruktion, wobei das Seil vollständig durchdrungen wird und
- Schließen des Zugträgers nach dem Eindringen.

Die Aufgabe der Erfindung besteht daher darin, ein Verfahren bereitzustellen, welches eine vollständige Durchgummierung des Seils gewährleistet, so dass die Anzahl von offenen Hohlräumen deutlich reduziert wird und somit ein Transport bzw. eine Wanderung von Flüssigkeiten in die Seilkonstruktion und vor allem innerhalb der Seilkonstruktion verhindert werden kann.

Gelöst wird diese Aufgabe dadurch, dass das Verfahren gemäss Anspruch 1.

Das Beschichten des Zugträgers erfolgt in einem Tauchbad. Bisher wurde üblicherweise der Zugträger einfach in das Tauchbad eingetaucht und wieder herausgezogen. Dadurch wurde aber lediglich, wie bereits eingangs erwähnt, ein Überzug auf den Zugträger ausgebildet. Zur vollständigen Durchdringung der Zugträgerkonstruktion mit der Beschichtungsmasse wurde nun überaschenderweise herausgefunden, dass die Zugträgerkonstruktion während der Beschichtung im Tauchbad kurzfristig geöffnet werden und anschließend wieder geschlossen werden kann, ohne dass hierbei die Seilkonstruktion als solches Nachteile erfährt. Insbesondere bei geschlossenen Seilkonstruktionen war ein vollständiges Durchdringen bisher schwierig und bei bestimmten Seilkonstruktionen gar nicht möglich.

Prinzipiell ist das erfindungsgemäße Verfahren für offene und geschlossene Seilkonstruktionen anwendbar.

Kurzzeitiges Öffnen bedeutet in diesem Zusammenhang, dass die Zugträgerkonstruktion für 0,2 sec bis 5 min, bevorzugt für 0,2 sec bis 10 sec geöffnet wird.

Das Öffnen der Zugträgerkonstruktion kann auf verschiedenen Wegen erfolgen. So ist es erfindungsgemäss beispielsweise möglich, eine mechanische Offnung der Seilkonstruktion mittels rotierender Scheiben zu ermöglichen. Hierbei ist allerdings auf den Verschleiß bzw. den Abrieb der der rotierenden Scheiben zu achten.

Weiterhin kann erfindungsgemäss das Seil zur mechanischen Offnung der Seilkonstruktion über wenigstens eine Rolle geführt werden. Durch die damit verbundene Seilbiegung wird die Seilkonstruktion kurzzeitig geöffnet und die Beschichtungsmasse kann hineinfließen. Das Umlaufen auf wenigstens einer Rolle führt zu einer längeren Verweilzeit des Seils im Tauchbad und somit dazu, dass möglichst viel Beschichtungsmasse eindringen kann.

Allerdings erfährt das Seil durch die Biegung eine zusätzliche mechanische Beanspruchung.

Des Weiteren ist es möglich, dass das Öffnen der Seilkonstruktion durch physikalische Anregung - was nicht erfindungsgemäss ist und dient lediglich der Veranschaulichung - zum Beispiel mittels Schwingung oder Ultraschall oder Infraschall oder magnetinduktive Schwingung oder der Seileigenfrequenz oder einer Kombination der genannten erfolgt. Die physikalische Anregung führt zu einem vereinfachten Hineinfließen der Beschichtungsmasse in die Seilkonstruktion.

Bei der Seileigenfrequenz wird bspw. das Seil so angeregt, dass die Seillitzen und die Seildrähte sich oszillatorisch voneinander entfernen und wieder aufeinander zubewegen. Gelingt es eine optimale "stehende Welle" zu erzeugen, so entstehen kurzzeitig neue Spalten in der Seilkonstruktion, durch die die Beschichtungsmasse fließen kann.

Das mechanische und physikalische Öffnen der Seilkonstruktion kann ggf. auch geeignet kombiniert werden, um die vollständige Durchdringung zu optimieren.

Das Seil für den Fördergurt ist in der Regel aus mehreren Litzen, welche wiederum aus einzelnen Drähten bestehen, aufgebaut. Die gängigsten Konstruktionen sind 7x7, mit einem Seil aus 7 Litzen, die je aus 7 Drähten bestehen, 1x19+7x7, mit einer Kernlitze aus 19 Einzeldrähten und äußeren Litzen aus je 7 Drähten, und 7x19, mit einem Seil aus 7 Litzen, wobei jede Litze aus 19 Drähten besteht.

Bevorzugt handelt es sich um ein Stahlseil oder um ein Stahl-Hybrid-Seil, bei dem wenigstens 20 Vol.-% des Seils aus Stahl bestehen.

Der nach dem erfindungsgemäßen Verfahren beschichtete Zugträger wird für die Herstellung von Fördergurten oder Transportbändern verwendet. In der Literatur wird häufig zwischen Fördergurten und Transportbändern unterschieden. Fördergurte werden in der Regel für Schüttgut (wie bspw. Kohle, Erze, Sand, Zement usw.) eingesetzt, während Transportbänder üblicherweise für Stückgut (Pakete usw.) benutzt werden. Fördergurte sind im Allgemeinen länger, breiter, dicker und stärker als Transportbänder. Im allgemeinen Sprachgebrauch vermischen sich allerdings die beiden Begrifflichkeiten oft. Die vorliegende Erfindung ist somit sowohl für Fördergurte als auch für Transportbänder geeignet, bei denen jeweils Seile zum Einsatz gelangen, die im Wesentlichen aus Stahl aufgebaut sind.

Das verwendete Beschichtungsmittel bzw. die verwendete Beschichtungsmasse wird in Abhängigkeit vom Material des Zugträgers und dessen Konstruktion ausgewählt.

Die Beschichtungsmasse ist auf der Basis wenigstens eines Elastomers aufgebaut. Bei dem Elastomer handelt es sich um Kautschuke. Es handelt sich um einen Kautschuk, der ausgewählt sein kann aus der Gruppe, bestehend aus

Naturkautschuk (NR) und / oder Butadien-Kautschuk (BR) und / oder ChloroprenKautschuk (CR) und / oder Styrol-Butadien-Kautschuk (SBR) und / oder Nitrilkautschuk (NBR, HNBR) und / oder Butylkautschuk (IIR) und / oder Ethylen-Propylen-Kautschuk (EPM) und / oder Ethylen-Propylen-Dien-Kautschuk (EPDM) und / oder Polyacrylat-Kautschuk (ACM) und / oder Epichlorhydrinkautschuk (ECO) und / oder Chlorsulfonierter Polyethylenkautschuk (CSM) und / oder Silikonkautschuk (MVQ) und / oder Fluorkautschuk (FPM). Die genannten Kautschuke können hierbei alleine oder im Verschnitt eingesetzt werden. Besonders gut geeignet sind als Beschichtungsmassen Mischungen auf der Basis von SBR und / oder NR und / oder BR. Die Beschichtungsmasse enthält zumeist noch wenigstens einen Vernetzer und / oder wenigstens einen Weichmacher und / oder wenigstens ein Lösungsmittel, über die in der Regel die Viskosität und / oder die Haftung bzw. die Klebrigkeit der Beschichtungsmasse eingestellt werden kann Erfindungsgemäss enthält die Beschichtungsmasse zumindest ein Blähmittel zur Vergrösserung des Volumens der Beschichtungmasse nach dem Vulkanisieren.

Als Blähmittel werden erfindungsgemäss Mikrokugeln eingesetzt Bei den Mikrokugeln handelt es sich um hohle Kugeln (Mikrosphären) mit einem Durchmesser im µm-Bereich aus Glas, Phenolharz, Kohlenstoff oder thermoplastischem Kunststoffmaterial. Die Mikrokugeln sind in bereits expandierter Form aber auch in expandierbarer Form auf dem Markt erhältlich. Um eine Volumenzunahme der Beschichtung erzielen zu können, welche zu einer Optimierung der Durchgummierung des Seils führt, werden bevorzugt expandierbare Mikrokugeln verwendet, die mit einem Treibmittel gefüllt sind und sich beim Erwärmen ausdehnen. Derartige Mikrokugeln werden z. B. unter dem Namen Expancel® von der Firma Akzo Nobel vertrieben.

Eine Kombination von expandierten und expandierbaren Mikrokugeln ist möglich.

Die einzelnen Drähte, insbesondere der Stahldrähte, der Zugträgerkonstruktion, sind in der Regel noch mit einem Adhäsionsmittel versehen. Hierbei handelt es sich bevorzugt um Zink, Messing, Zinkverbindungen, Messingverbindungen, Isocyanate, Epoxide oder weitere bekannte Adhäsionsmittel. Diese gewährleiten eine bessere Haftung der Beschichtungsmasse an dem einzelnen Draht.

Anhand von zwei Figuren soll die Erfindung näher erläutert werden, ohne dabei auf diese beschränkt zu sein.

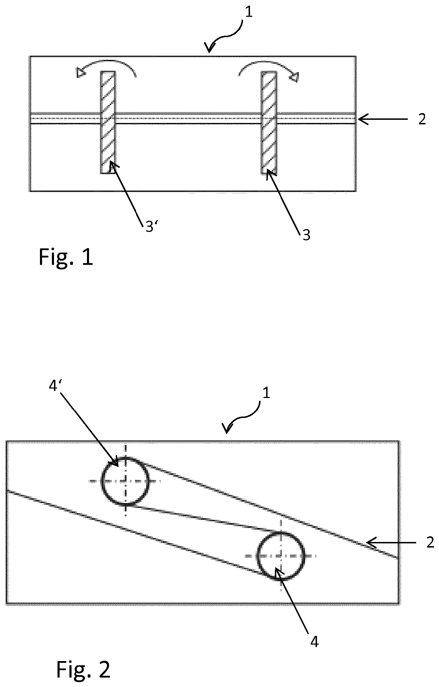

Fig. 1 zeigt eine erste Variante des erfindungsgemäßen Verfahrens anhand einer schematischen Darstellung. Der zu beschichtende Zugträger 2 wird durch ein Tauchbad 1 geführt. Durch rotierende Scheiben 3, 3' wird die Seilkonstruktion 2 kurzzeitig geöffnet, d.h. kurzzeitig entdrallt, so dass die Beschichtungsmasse vollständig eindringen kann. Bei Verwendung von wenigstens zwei rotierenden Scheiben können diese gleichläufig rotierend oder gegenläufig rotierend sein.

Fig. 2 zeigt eine zweite Variante des erfindungsgemäßen Verfahrens anhand einer schematischen Darstellung. Der zu beschichtende Zugträger 2 wird durch ein Tauchbad 1 geführt. Anhand wenigstens einer Rolle, um die die Seilkonstruktion 2 läuft, wird diese kurzzeitig geöffnet, wodurch die Beschichtungsmasse vollständig in das Seil eindringen kann.

### Bezugszeichenliste (Teil der Beschreibung)

- 1: Tauchbad
- 2: Zugträger in Seilkonstruktion
- 3, 3': rotierende Scheibe
- 4, 4': Rolle

## Patentansprüche

1. Verfahren zur Beschichtung eines Zugträgers (2), aufweisend wenigstens folgende Verfahrensschritte:
- Einführen des Zugträgers (2), welcher in Form eines Seils (2) ausgebildet ist, in ein Tauchbad (1), welches die Beschichtungsmasse enthält und
- Kurzzeitiges mechanisches Öffnen der Seilkonstruktion (2) während des Beschichtungsvorgangs, wobei das mechanische Öffnen durch rotierende Scheiben (3, 3') im Tauchbad (1) und / oder durch Umlaufen des Seils auf wenigstens einer Rolle (4, 4') im Tauchbad (1) erfolgt und wobei das kurzzeitige Öffnen innerhalb von 2 sec bis 5 min erfolgt und
- Eindringen der Beschichtungsmasse in die geöffnete Seilkonstruktion (2), wobei das Seil (2) vollständig durchdrungen wird und
- Schließen des Zugträgers (2) nach dem Eindringen,
wobei die Beschichtungsmasse auf der Basis wenigstens eines Kautschuks aufgebaut ist und wenigstens ein Blähmittel enthält, wobei als Blähmittel Mikrokugeln eingesetzt werden.

2. Verfahren nach Anspruch 1, **dadurch gekennzeichnet, dass** das die rotierenden Scheiben (3, 3') gegenläufig rotieren.

3. Verfahren nach einem der Ansprüche 1 bis 2, **dadurch gekennzeichnet, dass** das Seil (2) eine geschlossene Konstruktion aufweist.

4. Verfahren nach einem der Ansprüche 1 bis 3, **dadurch gekennzeichnet, dass** das Seil (2) ein Stahlseil oder ein Stahl-Hybrid-Seil ist.

## Claims

1. Process for coating a tensile member (2) comprising at least the following process steps:
- introduction of the tensile member (2) which is in the form of a rope (2) into an immersion bath (1) which contains the coating composition and
- short-duration mechanical opening of the rope construction (2) during the coating operation, wherein the mechanical opening is effected through rotating discs (3, 3') in the immersion bath (1) and/or through revolving of the rope around at least one roller (4, 4') in the immersion bath (1) and wherein the short-duration opening is effected over 2 sec to 5 min and
- penetration of the coating composition into the opened rope construction (2), wherein the rope (2) is completely penetrated and
- closing the tensile member (2) after the penetration,
wherein the coating composition is constructed on the basis of at least one rubber and contains at least one swelling agent, wherein microspheres are employed as the swelling agent.

2. Process according to Claim 1, **characterized in that** the rotating discs (3, 3') are counterrotating.

3. Process according to either of Claims 1 to 2, **characterized in that** the rope (2) has a closed construction.

4. Process according to any of Claims 1 to 3, **characterized in that** the rope (2) is a steel rope or a hybrid steel rope.

## Revendications

1. Procédé permettant d'appliquer un revêtement sur un support de traction (2), présentant au moins les étapes de procédé suivantes consistant à :
- introduire le support de traction (2), qui est réalisé sous la forme d'un câble (2), dans un bain d'immersion (1) qui contient la matière de revêtement, et
- pendant un bref délai, ouvrir mécaniquement la structure de câble (2) pendant le processus d'application du revêtement, l'ouverture mécanique étant effectuée par des disques tournants (3, 3') dans le bain d'immersion (1) et/ou par le passage du câble sur au moins une poulie (4, 4') dans le bain d'immersion (1), et l'ouverture pendant un bref délai étant effectuée dans un délai de 2 secondes à 5 minutes, et
- faire pénétrer la matière de revêtement dans la structure de câble (2) ouverte, le câble (2) étant imprégné entièrement, et
- fermer le support de traction (2) après la pénétration,
dans lequel la matière de revêtement est composée sur la base d'au moins un caoutchouc et contient au moins un agent gonflant, des microbilles étant mises en œuvre comme agent gonflant.

2. Procédé selon la revendication 1, **caractérisé en ce que** les disques tournants (3, 3') tournent dans des directions opposées.

3. Procédé selon l'une quelconque des revendications 1 à 2, **caractérisé en ce que** le câble (2) présente une structure fermée.

4. Procédé selon l'une quelconque des revendications 1 à 3, **caractérisé en ce que** le câble (2) est un câble d'acier ou un câble d'acier hybride.
